# EUROPÄISCHE PATENTSCHRIFT

(11) **EP 3 721 976 B1**
(45) Veröffentlichungstag und Bekanntmachung des Hinweises auf die Patenterteilung: **16.07.2025**
(21) Anmeldenummer: 20166709.4
(22) Anmeldetag: 30.03.2020
(51) Int. Cl.: A47L 15/42, B01D 65/02, B01D 29/64, B01D 46/00, B01D 33/46, D06F 58/22, D06F 39/10

(54) **SYSTEM ZUM REINIGEN EINES MEMBRANELEMENTS, INSBESONDERE EINES MEMBRANELEMENTS EINES WASSERFÜHRENDEN HAUSHALTSGERÄTS, UND VERFAHREN ZUM REINIGEN EINES MEMBRANELEMENTS**
SYSTEM FOR CLEANING A MEMBRANE ELEMENT, IN PARTICULAR A MEMBRANE ELEMENT OF A WATER-CARRYING HOUSEHOLD APPLIANCE, AND METHOD FOR CLEANING A MEMBRANE ELEMENT
SYSTÈME DE NETTOYAGE D'UN ÉLÉMENT MEMBRANE, EN PARTICULIER D'UN ÉLÉMENT MEMBRANE D'UN APPAREIL ÉLECTROMÉNAGER À CIRCULATION DE L'EAU, ET PROCÉDÉ DE NETTOYAGE D'UN ÉLÉMENT MEMBRANE

(30) Priorität: 08.04.2019 DE 102019204990
(43) Veröffentlichungstag der Anmeldung: 14.10.2020
(73) Patentinhaber: BSH Hausgeräte GmbH, 81739 München (DE)
(72) Erfinder: Bischof, Andreas, 10407 Berlin (DE); Eglmeier, Hans, 10587 Berlin (DE)

(56) Entgegenhaltungen:
- EP-B1- 1 788 142
- US-A- 4 740 312
- US-A1- 2016 310 877
- US-A1- 2018 030 645
- US-A1- 2019 010 071

## Beschreibung

Die vorliegende Erfindung betrifft ein System zum Reinigen eines Membranelements, insbesondere eines Membranelements eines wasserführenden Haushaltsgeräts, und ein Verfahren zum Reinigen eines Membranelements.

In wasserführenden Haushaltsgeräten kommen häufig Filter zum Einsatz, mit denen Partikel oberhalb einer durch eine Filterdimensionierung gegebenen Größe aus einem Wasserstrom ausgefiltert werden, z. B. aus einem Zulaufwasser, einem Abwasser oder einem im Kreislauf zirkulierenden Wasser. Diese Filter bzw. dessen Membranelement setzen sich mit den auszufilternden Partikeln sehr schnell zu, weswegen häufig sog. "Rakel" zum Wiederherstellen der Filterfähigkeit durch Abtragen der Filterbelegung benutzt werden. Beispiele für solche Rakel sind in der DE 10 2013 224 968 A1 und der EP 1 788 142 B1 zu finden.

Dabei wird die Rakel über das Membranelement gezogen und die an der Oberfläche des Membranelements angesammelten Partikel werden entfernt. Wegen der geringen Eigenstabilität des Membranelements kommt es hierbei zu Durchbiegungen des Membranelements, was die Effektivität des Entfernens der Partikel beeinflusst. Um dieser Problemantik entgegenzuwirken, kennt der Stand der Technik biegsame Rakel, ein Einspannen des Membranelements, um dem Durchbiegen entgegenzuwirken, und die Unterstützung des Membranelements mittels einer Stützstruktur, die Längsstreben und Querstreben aufweist.

Die US 2019/0010071 A1 offenbart eine Maschine mit einem Filtersystem zum Filtern von Wasser aus einer schlammigen Masse mit Bezug zum Bergbau. Das Filtersystem umfasst eine Membran und ein Gestell mit Querstreben, wobei die Membran mittels eines Abstreifers bzw. einer Bürste gereinigt werden kann.

Die US 2018/0030645 A1 offenbart eine Filtereinheit für Trockner mit einer einem rotierbaren Filtermedium. Dabei kann abwechselnd ein Abschnitt des Filtermediums mittels eines Bürstenmechanismus von Flusen befreit werden, während ein zweiter Abschnitt zum Filtern eingesetzt wird.

Die US 2016/0310877 A1 offenbart ein Flüssigkeitsfiltergerät mit einem Gehäuse und einer darin befindlichen ringförmigen Filtereinheit.

Die EP 1 788 142 B1 offenbart eine Vorrichtung zum Trocknen von Wäsche mittels eines Luftstroms. Ein Kanalsystem zur Führung des Luftstroms umfasst einen Abschnitt, in welchem ein Sieb zum Auffangen von Flusen aus dem Luftstrom angeordnet ist, wobei dem Sieb eine Rakel zum Abstreifen aufgefangener Flusen zugeordnet ist.

Ausgehend von diesem Stand der Technik macht es sich die vorliegende Erfindung zur Aufgabe, ein System zum Reinigen des Membranelements bereitzustellen, das gegenüber den aus dem Stand der Technik bekannten System verbessert ist, insbesondere in Hinblick auf seine Lebensdauer und Effektivität.

Diese Aufgabe wird gelöst durch ein System gemäß Anspruch 1 und ein Verfahren gemäß Anspruch 6. Weitere Vorteile und Merkmale der Erfindung ergeben sich aus den Unteransprüchen sowie der Beschreibung und den beigefügten Figuren.

Gemäß einem ersten Aspekt der vorliegenden Erfindung ist ein System zum Reinigen eines Membranelements, insbesondere eines Membranelements eines wasserführenden Haushaltsgeräts, vorgesehen umfassend:
- eine Stützstruktur, an die das Membranelement angebunden ist und/oder auf der das Membranelement (2) aufliegt, und
- ein Rakelelement, das im Betrieb zum Reinigen des Membranelements entlang einer Rakelbewegungsrichtung über das Membranelement bewegbar ist,
wobei die Stützstruktur im vom Rakelelement bearbeiteten Bereich des Membranelements ausschließlich Stützstege aufweist, die sich längs der Rakelbewegungsrichtung erstrecken.

Gegenüber dem Stand der Technik ist es erfindungsgemäß vorgesehen, dass der vom Rakelelement bearbeitete Bereich des Membranelements ausschließlich solche Stützstege aufweist, die sich längs der Rakelbewegungsrichtung erstrecken. Mit anderen Worten: Es wird auf Stützstege verzichtet, die sich quer zur Rakelbewegungsrichtung erstrecken. Entsprechend lassen sich Überfahrten des Rakelelements über die quer verlaufenden Stützstege vermeiden, was sich signifikant auf die Lebensdauer des Rakelelements auswirkt. Dabei ist es ferner von Vorteil, dass sich eine Durchbiegung, insbesondere eine geometrische Ausformung der Durchbiegung, des Membranelements während Rakelbewegung entlang der Rakelbewegungsrichtung im Wesentlichen nicht ändert. Entsprechend lässt sich das Rakelelement für eine bestimmte, zu erwartenden Ausbiegung des Membranelements bzw. des Bereichs des Membranelements, der zu rakeln ist, optimieren. Dies ermöglicht unter anderem auch eine flexiblere Ausgestaltung des Rakelelements und des Membranelements, insbesondere hinsichtlich Form und Material. Zudem lassen sich längere Laufzeiten für das System zum Reinigen des Membranelements erzielen.

Vorzugsweise ist das System integriert bzw. Teil eines Filters in einem wasserführenden bzw. fluidführenden Haushaltsgeräts. Beispiel für solche Haushaltsgeräte sind Waschmaschinen, Spülmaschinen und/oder Trockner. Bevorzugt bilden die Stützstruktur und der Filter bzw. das Membranelement ein einstückiges Bauteil bzw. sind integral miteinander ausgestaltet. Vorzugsweise ist das Rakelelement ein Abstreifkörper mit einer definierten Kante, bzw. ein definierter Bereich, mit dem eine zu berakelnde Fläche z.B. von überschüssigen Partikeln befreit werden kann. Die Kante, bzw. der Bereich, kann dabei eine harte Kante, eine weiche Kante (z.B. Gummilippe) oder auch aus mehreren Borsten bestehen (z.B. vor allem Bürste).

Vorzugsweise ist das Membranelement im Wesentlichen eine flächige bzw. zweidimensionale Struktur aus einem Filtermedium, z.B. umfassend ein Kunstfasergewebe ("Gaze"), ein Kunststofffaservlies und/oder ein Lochblech bzw. eine Lochfolie, wobei hier die Bleche zur Ausbildung der Löcher beispielsweise mittels Laser perforiert werden. Solche Membranelemente zeichnen sich insbesondere dadurch aus, dass sie eine wenig dehnbare, aber biegsame Form aufweisen, die gegenüber Verbiegungen keine große Eigenstabilität aufweisen. Das Membranelement weist dabei vorzugsweise eine Primärseite und eine der Primärseite gegenüberliegende Sekundärseite auf, wobei das Membranelement von einem Fluid durchsetzt wird, das über die Primärseite in das Membranelement eintritt und über die Sekundärseite aus dem Membranelement austritt. Entsprechend lagern sich beim Filtern an der Primärseite Partikel ab, die größer sind als die Perforation bzw. Öffnung in dem Membranelement. Mittels des Rakelelements lassen sich die auf der Primärseite angelagerten Partikel wieder entfernen. Hierzu wird im Betrieb das Rakelelement über die Primärseite geführt, wobei es vorzugsweise vorgesehen ist, dass das Rakelelement mit einer Rakelkante mit der Primärseite des Membranelements in Kontakt steht.

Vorzugsweise ist es vorgesehen, dass das Membranelement an der Stützstruktur bzw. an den Stützstegen angebunden ist und dabei so aufgespannt ist, dass sich zwischen den Stützstegen, die sich längs der Rakelbewegungsrichtung erstrecken, Bereiche des Membranelements ausformen, die nicht gestützt werden von der Stützstruktur. Dabei unterscheidet der Fachmann zwischen Stützstegen und einer Haltestruktur, wobei die Haltestruktur derart beabstandet ist zu dem Membranelement, dass die Haltestruktur keinerlei Einfluss nimmt auf die Durchbiegung bzw. Auswölbung des Membranelements im Betrieb. Entsprechend kann ein System Querstreben (bezogen auf die Rakelbewegungsrichtung) oder streben-ähnliche Ausformungen aufweisen. Diese sind dann allerdings als Haltestrukturen ausgestaltet oder begrenzen den Bereich, der von dem jeweiligen Rakelelement, zu berakeln ist. Weiterhin kann es vorgesehen sein, dass das Membranelement in einzelne Bereiche bzw. Segmente unterteilt ist, für die jeweils ein Rakelelement vorgesehen ist, das im Betrieb über diesen entsprechenden Bereich bzw. das Segment hinweg gefahren wird. Vom Gegenstand der Erfindung werden z. B. auch solche Systeme erfasst, die derartige Segmente ausbilden, wenn hierfür ein entsprechendes Rakelelement vorgesehen ist, das ausschließlich zur Bearbeitung dieses Segments bzw. dieses Bereichs vorgesehen ist.

Weiterhin ist es bevorzugt vorgesehen, dass unter einer Rakelbewegung jegliche eindimensionale Bewegung des Rakelelements zu verstehen ist, sei sie endlos oder begrenzt oszillierend. Dabei bedeutet eindimensional insbesondere das Position und Orientierung des Rakelelements auf einer Bewegungsbahn durch einen einzigen Parameter spezifiziert werden kann. Dabei kann die Bewegungsbahn selbst eindimensional (linear), zweidimensional (z.B. kreisförmig) oder auch dreidimensional verlaufen.

Erfindungsgemäß ist es vorgesehen, dass das Rakelelement eine Rakelkante mit einem geschwungenen Rakelkantenverlauf, vorzugsweise einem parabelförmigen, kreisbogenförmigen und/oder einem einer Kettenlinie folgenden Rakelkantenverlauf, aufweist, insbesondere an einer im Betrieb der Primärseite zugewandten Seite der Rakelkante. D. h. der geschwungene Rakelkantenverlauf steht in Kontakt mit dem Membranelement. Durch die vorteilhafte Ausgestaltung der Stützstege derart, dass sie sich ausschließlich längs der Rakelbewegungsrichtung erstrecken, ist es in vorteilhafter Weise möglich, das Rakelelement, insbesondere dessen Rakelkante derart auszuformen, dass sie optimiert ist an eine sich während der Rakelbewegung im Wesentlichen kaum ändernde Ausbiegung des Membranelements. Dabei kann der Rakelkantenverlauf einen parabelförmig oder an einer Kettenlinie folgenden Rakelkantenverlauf aufweisen. Insbesondere für vergleichsweise schmale Bereiche des Membranelements, die zwischen zwei benachbarten Stützstegen ausgebildet sind, kann es bereits ausreichen, die zu erwartende Ausformung des Membranelements als kreisbogenförmig anzunehmen und den Kantenverlauf des Rakelelements entsprechend auszubilden.

Mit anderen Worten: Es ist in vorteilhafter Weise möglich, den Rakelkantenverlauf an den zu erwartenden Verlauf des sich zwischen zwei benachbarten Stegelementen durchbiegenden Membranelement anzupassen. Zudem ist eine Möglichkeit gegeben, den Rakelkantenverlauf anzupassen an eine Geometrie der Stützstruktur, die vorgegeben ist durch die Stützstege, die sich längs der Rakelbewegungsrichtung erstrecken. Durch die optimierte Gestaltung des Kontakts zwischen Rakelkantenverlauf und Membranelement ist eine verbesserte Abtrageleistung durch das Rakelelement realisierbar. Außerdem ist es möglich, auf preisgünstigere Membranelemente mit reduzierter Eigenstabilität zurückzugreifen, da sich die Anpassung für einen optimalen Abtrag auf den Rakelkantenverlauf beschränken lässt.

Gemäß einer weiteren bevorzugten Ausführungsform der vorliegenden Erfindung ist es vorgesehen, dass das Rakelelement starr ausgebildet ist. Entsprechend lässt sich auf eine gummielastische Ausformung des Rakelelements verzichten und stattdessen eine formstabile Ausgestaltung des Rakelelements, bspw. aus Kunststoff, vornehmen. Dadurch lässt sich z. B. ein Umspringen der Form verhindern, was bei aus gummielastischen Materialien ausformten Rakelelementen regelmäßig auftreten kann. Zudem lassen sich derartige formstabile Rakelelemente einfacher und preisgünstiger herstellen und es lassen sich weitere Funktionen in das entsprechende Kunststoffbauteil einfacher integrieren, wie z.B. ein Mechanismus zum Abtransportieren der abgerakelten Partikel, einen Griff zum Entnehmen des Rakelelements oder Ähnliches.

Gemäß einer weiteren Ausführungsform der vorliegenden Erfindung ist es vorgesehen, dass der Stützsteg, der sich längs der Rakelbewegung erstreckt, ringförmig ausgestaltet ist. Dadurch lässt sich ein System bereitstellen, bei dem das Rakelelement eine endlose Bewegung durchführen kann, das heißt bspw. durch die Rotation um eine Rotationsachse in seine Ausgangstellung zurückkehren kann und durch Wiederholen seiner Bewegung ein mehrfaches Überfahren des zu rakelnden Bereichs des Membranelements realisieren kann. Vorzugsweise ist es vorgesehen, dass mehrere ringförmige Stützstege vorgesehen sind, die insbesondere konzentrisch zueinander angeordnet sind. Insbesondere erlaubt es eine derartige Ausformung, einen Motor zu verwenden, der lediglich eine einzelne Drehrichtung hat. Man kann entsprechend auf komplexe Antriebe mit verschiedenen Bewegungsrichtungen verzichten.

In einer weiteren bevorzugten Ausführungsform der vorliegenden Erfindung ist es vorgesehen, dass das Membranelement zylinderförmig, quaderförmig und/oder kegelförmig ausgebildet ist und wobei das Rakelelement insbesondere innerhalb oder außerhalb des Membranelements angeordnet ist. Bei einem derartigen Membranelement ist es vorzugsweise vorgesehen, dass das zu filternde Fluid durch eine nach radial außen gerichtete Flussrichtung vom Inneren des zylinderförmig, quaderförmigen oder kegelförmigen, d.h. körperförmigen, Membranelements nach außen tritt. Entsprechend würde in diesem Fall die Innenseite des körperförmigen Membranelements die Primärseite bilden, während die Außenseite des Membranelements die Sekundärseite bildet. Entsprechend wäre zur Abtragung der Partikel ein derartiges Rakelelement vorzusehen, das innerhalb des Membranelements angeordnet ist und im Betrieb über die Innenseite des körperförmigen Membranelements entlang der Rakelbewegungsrichtung geführt wird. Alternativ ist es vorstellbar, dass zum Filtern das Fluid von außen über die Außenfläche ins Innere des körperförmigen Membranelements eindringt. In diesem Fall bildet die Außenseite des körperförmigen Membranelements die Primärseite und die Sekundärseite wird durch die Innenseite des körperförmigen Membranelements ausgebildet. Entsprechend wäre hier das Rakelelement außerhalb des körperförmigen Membranelements angeordnet und würde dann an dessen Außenseite entlanggeführt werden, um die Partikel abzutragen bzw. wegzubefördern. Insbesondere ist es vorgesehen, dass das Rakelelement an seinem Außenumfang derart gebogen bzw. geschwungen ausgeformt ist, dass der geschwungene Verlauf dem zu erwartenden Ausbiegungen im Membranelement entspricht und somit eine Anpassung an die Position und Orientierung der jeweiligen Stützstegelemente erfolgt. Dabei kann das Rakelelement bspw. scheibenförmig ausgestaltet sein und entlang eines sich entlang der Längsrichtung erstreckenden körperförmigen Membranelements bewegen. Alternativ kann das Rakelelement um eine Rotationsachse rotieren, die parallel zur Längsrichtung des sich in Längsrichtung erstreckenden körperförmigen Membranelements verläuft. Sofern eine Rotation vorgesehen ist, wird das Rakelelement tangential an der Primärseite entlanggeführt, um die Partikel abzutragen. Weiterhin ist es vorstellbar, bspw. bei einem zylinderförmigen Membranelement, die Stirnseiten bzw. mindestens eine Stirnseite als Teil des Membranelements auszugestalten, sodass das Membranelement nicht parallel zueinander verlaufende Segmente aufweist, nämlich einen Mantelbereich und einen Stirnflächenbereich. Dabei kann es insbesondere vorgesehen sein, dass das Rakelelement derart konfiguriert ist, dass es an den mehreren nicht parallel zueinander verlaufenden Segmenten anliegt und beide simultan von den Partikeln befreit.

In einer weiteren bevorzugten Ausführungsform der vorliegenden Erfindung ist es vorgesehen, dass mindestens ein Stützsteg, der sich längs der Rakelbewegungsrichtung erstreckt, zwischen dem Rakelelement und dem Membranelement angeordnet ist und/oder das mindestens ein Stützsteg, der sich längs der Rakelbewegungsrichtung erstreckt, zur Führung des Rakelelements konfiguriert ist. Dadurch lässt sich dem Stützsteg neben der Aufspannung bzw. der Stützfunktion des Membranelements eine weitere Funktionalität zuordnen. Schließlich ist es so möglich, eine unmittelbare Wechselwirkung, insbesondere eine formschlüssige Wechselwirkung zwischen dem Rakelelement und dem Stützsteg zu realisieren. Diese gestattet wiederum, dass in vorteilhafter Weise das Rakelelement von den Stützstegen während der Bewegung über das Membranelement entlang der Rakelbewegungsrichtung geführt wird. Insbesondere ist somit der Stützsteg bzw. zumindest einer oder eine Mehrzahl von Stützstegen, die sich längs der Rakelbewegungsrichtung erstrecken, auf der Primärseite des Membranelements angeordnet. Dabei ist es auch vorstellbar, dass das System sowohl Stützstege aufweist, die an der Primärseite angeordnet sind, als auch solche, die auf der Sekundärseite angeordnet sind. Dies ist bspw. durch Umspritzen des Membranelements mit einer entsprechenden Stützstruktur vorstellbar. Weiterhin ist es insbesondere vorgesehen, dass das Rakelelement passende bzw. entsprechend modifizierte Einbuchtungen auf der Seite, die den Rakelkantenverlauf definiert, aufweist. Bspw. sind diese Einbuchtungen als Nut ausgeformt.

Hier offenbart ist ein Rakelelement, insbesondere für ein erfindungsgemäßes System oder in einem erfindungsgemäßen System, wobei das Rakelelement ein geschwungenen Kantenverlauf, vorzugsweise ein parabelförmigen, einen kreisbogenförmigen und/oder einer Kettenlinie folgenden Rakelkantenverlauf aufweist. Die Merkmale und Vorteile, die für das System beschrieben worden sind, gelten in entsprechender Weise analog für das Rakelelement und andersrum. Insbesondere ist es vorgesehen, dass mehrere Einzelrakelelemente zu einem mehrelementigen Rakelelement kombiniert bzw. zusammengefasst sind. Z.B. ist ein mehrelementiges Rakelelement als sternförmiges Rakelelement mit mehreren radial oder spiralförmig verlaufenden Rakelkanten vorstellbar. Das mehrelementige Rakelelement kann auch als Rakelstern in einem zylinderförmigen Membranelement, bei dem eine tangentiale Berakelung erfolgt, oder in Form als mehrgängige Schraube ausgebildet sind.

Weiterhin lässt sich das Rakelelement in vorteilhafter Weise richtungsunabhängig gestalten. Insbesondere für oszillierende Bewegung ist es somit möglich, an der Unterseite des Rakelelements beispielsweise zwei Rakelkanten vorzusehen, die abhängig von der jeweiligen Bewegungsrichtung für das Verdrängen/Verschieben der Partikel sorgt. Dies ist insbesondere für solche Systeme von Vorteil, bei denen durch einen Wechsel der Drehrichtung das Rakelelement der Gefahr eines Aufwickelns langer Fasern bzw. Haare begegnet werden soll. Außerdem ist es vorstellbar, dass die jeweiligen Rakelkanten an die unterschiedlichen Aufgaben spezifiziert sind.

Gemäß einer weiteren Ausführungsform **ist** der geschwungene Rakelkantenverlauf angepasst an die Form der Stützstruktur, insbesondere an den Verlauf der Stützstege, die sich längs der Rakelbewegungsrichtung erstrecken. Mit anderen Worten: der geschwungene Rakelkantenverlauf ist abgestimmt mit der Position und Orientierung der Stützstege, die sich längs der Rakelbewegungsrichtung erstrecken. Entsprechend lässt sich das Rakelelement optimal für die zu erwartende Membranausformung bzw. Ausbuchtung anpassen.

Gemäß einer weiteren bevorzugten Ausführungsform ist es vorgesehen, dass der Rakelkantenverlauf schräg zur Rakelbewegungsrichtung verläuft. Zudem ist es vorstellbar, dass die Rakelkante eine nicht ebene Form aufweist, insbesondere an einer Seite der der Rakelbewegung im Betrieb zugewandt ist. Insbesondere ist es vorgesehen, dass der generelle Verlauf der Rakelkante in einer Schnittebene, die parallel zum Membranelement verläuft, schräg zu einer Ebene verläuft, die sich senkrecht zur Rakelbewegungsrichtung erstreckt. Dadurch ist es in vorteilhafter Weise möglich, die aufgesammelten Partikel seitlich (bezogen auf die Rakelbewegungsrichtung) nach außen zu drängen und wegzubefördern. Das heißt, es ist möglich laterale Schubkräfte bereitzustellen, die ein Abfördern der Partikel unterstützt.

Ein weiterer Gegenstand der vorliegenden Erfindung ist ein Verfahren zum Reinigen eines Membranelements, insbesondere mit einem erfindungsgemäßen System oder Rakelelement, wobei die Rakelbewegung eine oszillierende Bewegung oder eine endlose Bewegung ist. Sofern es sich um eine oszillierende Bewegung handelt, beschränkt sich die Bewegung des Rakelelements vorzugsweise auf ein Kreissegment oder ein rechteckiges Segment des Membranelements. Dabei ist es vorstellbar, dass das Rakelelement beim Rücklauf aufgesetzt bleibt oder von dem Membranelement bzw. dem Segment angehoben wird. Alle für das Rakelelement und das System beschriebene Merkmale und Vorteile gelten in analoger Weise für das Verfahren und visa versa.

Weitere Vorteile und Merkmale ergeben sich aus der nachfolgenden Beschreibung bevorzugter Ausführungsformen des erfindungsgemäßen Gegenstands mit Bezug auf die beigefügte Figur. Einzelne Merkmale der einzelnen Ausführungsform können dabei im Rahmen der Erfindung miteinander kombiniert werden.

Es zeigt:
- **Fig. 1 bis 4:**: ein System zum Reinigen eines Membranelements gemäß dem Stand der Technik
- **Fig. 5**: ein System zum Reinigen eines Membranelements gemäß einer ersten bevorzugten Ausführungsform der vorliegenden Erfindung
- **Fig. 6**: ein System zum Reinigen eines Membranelements gemäß einer zweiten bevorzugten Ausführungsform der vorliegenden Erfindung
- **Fig. 7**: ein System zum Reinigen eines Membranelements gemäß einer dritten bevorzugten Ausführungsform der vorliegenden Erfindung
- **Fig. 8**: ein System zum Reinigen eines Membranelements gemäß einer vierten bevorzugten Ausführungsform der vorliegenden Erfindung
- **Fig. 9**: ein System zum Reinigen eines Membranelements gemäß einer fünften bevorzugten Ausführungsform der vorliegenden Erfindung
- **Fig. 10**: ein System zum Reinigen eines Membranelements gemäß einer sechsten bevorzugten Ausführungsform der vorliegenden Erfindung
- **Fig. 11**: ein System zum Reinigen eines Membranelements gemäß einer siebten bevorzugten Ausführungsform der vorliegenden Erfindung
- **Fig. 12**: ein System zum Reinigen eines Membranelements gemäß einer achten bevorzugten Ausführungsform der vorliegenden Erfindung
- **Fig. 13**: ein System zum Reinigen eines Membranelements gemäß einer neunten bevorzugten Ausführungsform der vorliegenden Erfindung
- **Fig. 14**: ein System zum Reinigen einer Membran gemäß einer zehnten bevorzugten Ausführungsform der vorliegenden Erfindung

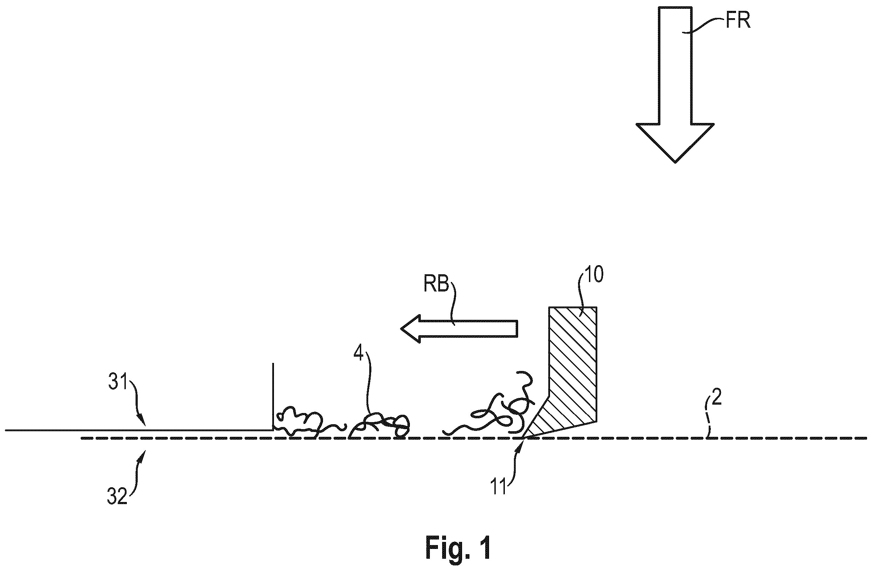

In den **Figuren 1 bis 4** sind Systeme 1 zum Reinigen eines Membranelements 2 gemäß dem Stand der Technik dargestellt. Solche Systeme 1 sind beispielswese in wasserführenden Haushaltsgeräten zu finden, insbesondere in Filtersystemen von wasserführenden Haushaltsgeräten, und dienen dem Herausfiltern von Partikeln 4 aus einem Fluid, das im Betrieb durch das Membranelement 2 entlang einer Flussrichtung FR hindurchströmt. Das System 1 umfasst dabei ein Membranelement 2, welche von einer Halte- bzw. Stützstruktur 20 in Position gehalten wird. Das Membranelement 2 ist dazu mit einem den Umfang des Membranelements 2 definierenden Rahmen versehen, an welchem das Membranelement 2 durch Formschluss, Stoffschluss und/oder Reibschluss so befestigt ist, dass dieser Rahmen als Einspannung dient. Dabei weist das Membranelement 2 eine Primärseite 31, die im Betrieb einem Zufluss eines zu filterndes Fluids zugewandt ist, und eine Sekundärseite 32, aus der ein abfließendes Filtrat heraustritt, auf. Mittels des Rahmens (im Zusammenspiel mit einem nicht dargestellten Filtergehäuse bzw. einer restlichen Konstruktion) wird bevorzugt der Primärseite 31 von der Sekundärseite 32 abgegrenzt und abgedichtet bzw. eine Abdichtung zwischen der Primärseite 31 und der Sekundärseite 32 ermöglicht.

Das Membranelement 2 zeichnet sich durch eine ebene, nur wenig dehnbare, aber biegsame Form aus, die im Wesentlichen keine große Eigenstabilität gegen Verbiegung vorweisen kann.

Filtersysteme, die ein solches Membranelement 2 aufweisen, verstopfen vergleichsweise schnell mit den auszufilternden Partikeln 4 (typisch z.B. Verstopfung mit Abwasser von Waschgeräten in weniger als einem Waschgang). Eine Standzeit eines derartigen Filtersystems lässt sich signifikant erhöhen, wenn an einer Oberfläche des Membranelements 2, insbesondere auf der Primärseite 31, deponierten Partikel 4 regelmäßig bzw. permanent beseitigt werden, z.B. permanent, turnusmäßig und/oder nach Bedarf. Eine Möglichkeit zur Beseitigung der Partikel 4 vom Membranelement 2 nutzt ein Rakelelement 10: Dazu wird das Rakelelement 10, das insbesondere eine in Richtung des Membranelements 2 abstehende Rakelkante 11 bzw. eine der Primärseite zugewandte Rakelkante 11 aufweist, im Betrieb über das Membranelement 2, insbesondere über die Primärseite 31 der Membranoberfläche gezogen. Hinter dem Rakelelement 10 bleibt im Idealfall eine von Partikeln 4 befreite Spur in der Breite der auf eine Rakelbewegungsrichtung RB des Rakelelements 10 projizierten Rakelkantenlänge, während vor dem Rakelelement 10 die gefilterten Partikel 4 zusammengeschoben werden. Damit das funktioniert, muss die Rakelkante 11 wenigstens während des Reinigungsvorgangs in einem guten Kontakt zur Membranoberfläche bzw. der Primärseite 31 stehen, d. h. Membranelement 2 und Rakelkante 1 müssen sich mehr oder weniger lückenlos mit einer Mindestkraft aneinander anlegen.

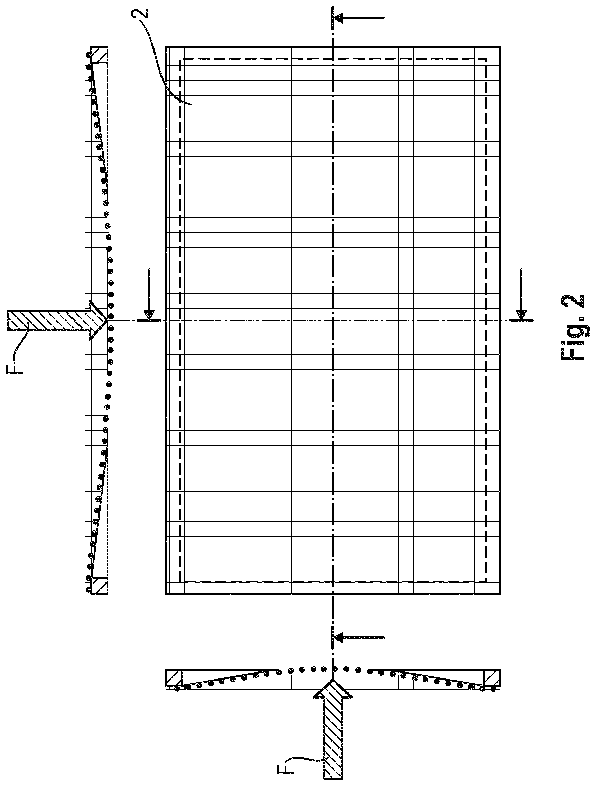

Da das Membranelement 2 biegeelastisch ist, wölbt es sich unter einer einwirkenden Kraft F bzw. Normalkraft, z.B. einer durch das einseitige Andrücken des Rakelelements 10 hervorgerufenen Normalkraft und/oder durch einen Druck des Fluids beim Filtern, und entfernt sich somit teilweise von der Rakelkante 11 bzw. reduziert die Andruckkraft, vor allem in der Mitte des zu räkelnden Bereichs des Membranelements 2, wie es in Figur 2 dargestellt ist. Durch laterales Spannen des Membranelements 2 lässt sich das Problem nur teilweise lösen, da eine Durchbiegung aus physikalischen Gründen zwingend ist.

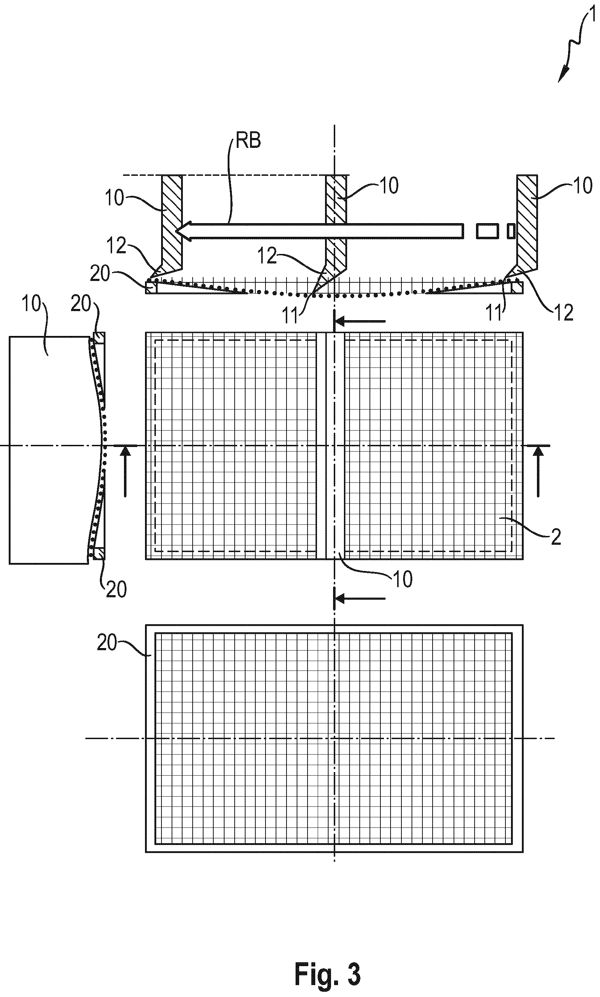

Eine Lösung für dieses Problem ist die Verwendung einer elastischen Rakelkante 11 aus gummielastischem Material, wie z.B. eine Rakellippe 12 bzw. Gummilippe (wie bei einem Fensterabzieher). Die Rakellippe 12 muss einen der Durchbiegung des Membranelements 2 angemessenen elastischen Hub ermöglichen und am Ende des Hubs auch noch ausreichend Kraft für einen wirksamen Kontakt aufbringen. Das System 1 muss daher insgesamt auf die maximal mögliche Auslenkung des Membranelements 2 in der Mitte des Membranelements 2 ausgelegt sein und ist somit in den meisten Arbeitssituationen, insbesondere außerhalb des Bereichs der maximalen Auslenkung des Membranelements 2, überdimensioniert. Dies zeigt beispielsweise die Figur 3.

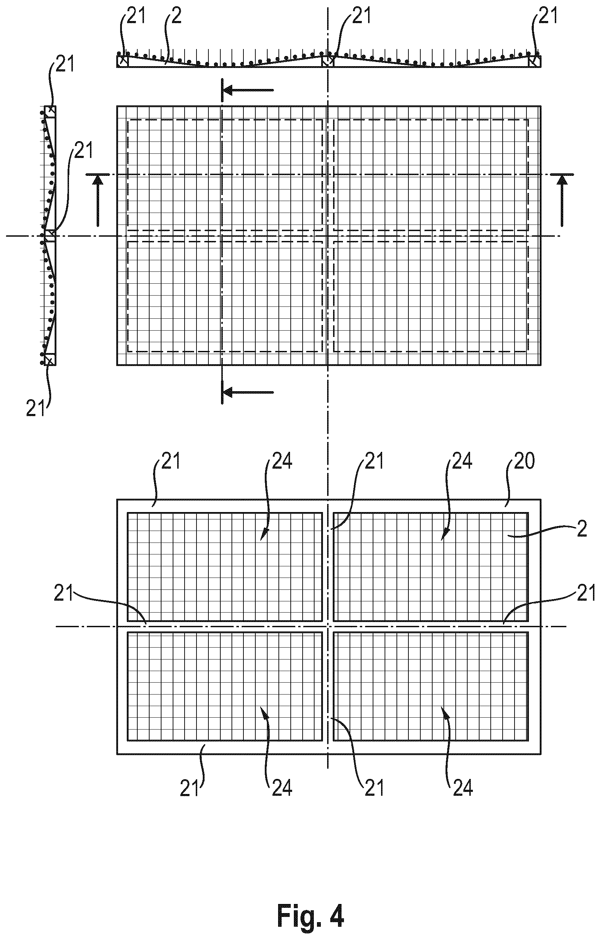

Da mit einem solchen elastischen Rakelkante 11 immer nur ein kleiner Abstand zwischen Rakelkante 11 und dem Membranelement 2 ausgeglichen werden kann, kann das Membranelement 2 mit einer Stützstruktur 20 unterstützt werden, wodurch das Membranelement 2 in kleinere durchbiegbare Segmente 24 aufgeteilt wird, wobei jedes das gleiche mechanische Verhalten zwischen Rakelkante 11 und Membranelement 2 aufweist, wie bei einem ungestützten Membranelement 2 (d.h. ein gleiches Durchbiegung der freien Membranfläche unter der Normalkraft des Rakelelements 10 bzw. einem Flüssigkeitsdruck mit entsprechender Verringerung der Kontaktkraft vor allem in der Mitte des berakelten Bereichs), aber auf durch die Segmentierung entsprechend verkleinerter Skala. Dies ist in Figur 4 illustriert.

D. h. es ist z. B. ein rechteckiges Membranelement 2 mit einem über die volle Breite gehenden Rakelelement 10 bekannt, das je Durchgang einmal über die volle Länge des Membranelements 2 gezogen wird, wobei das rechteckige Membranelement 2 von einer häufig ebenfalls rechteckigen Stützstruktur 20 aus senkrecht zueinander verlaufenden Stützstegen 21 unterstützt wird, welche das Membranelement 2 in eine Anzahl kleinerer Segmente 24 aufteilt (Fig. 4). Nachteil dieser Konstruktion ist ein aufwendiges Rakelelement 2, bei dem die weichelastische Rakelkante 11 während der Rakelbewegung abwechselnd über freie Membranfläche, d. h. nicht unterstützte Bereich des Membranelements, und quer zur Rakelbewegung verlaufende Stützstege 21 der Stützstruktur 20 partiell auf und ab bewegt wird. Ein System 1 dieser Bauart führt zu einem höheren Verschleiß des Membranelements 2 und des Rakelelements 10, vor allem wegen Belastungen im Bereich der Stützstreben 21 der Stützstruktur 20. Ebenfalls denkbar ist ein mit einer sehr großen Anzahl sehr kleiner Segmente 24 unterstütztes Membranelement 2 (z.B. in Form eines Lochblechs als Stützstruktur). Nachteil dieses Systems 1 ist eine unerwünscht starke Reduktion der freien Membranfläche.

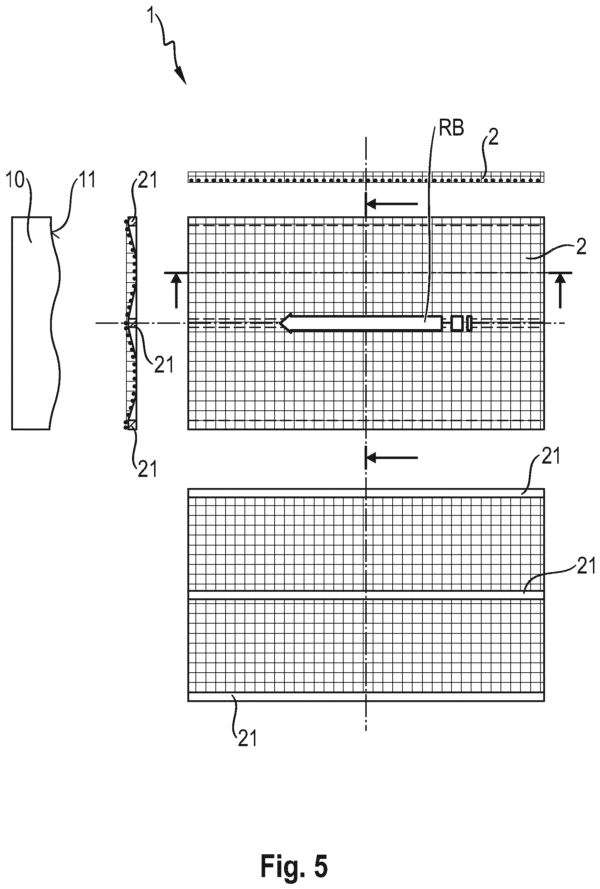

**In** **Figur 5** ist ein System 1 zum Reinigen von Membranelementen 2 gemäß einer ersten bevorzugten Ausführungsform der vorliegenden Erfindung dargestellt. Um den Verschleiß des Rakelelements 10 und damit dessen Lebensdauer zu verbessern, ist es vorgesehen, dass die Stützstruktur 20 ausschließlich Stützstege 21 aufweist, die sich entlang der Rakelbewegungsrichtung RB erstrecken. In dem in Figur 5 dargestellten Ausführungsbeispiel sind drei zueinander parallel verlaufende Stützstege 21 dargestellt, wobei zwei dieser Stützstege 21 am äußeren Rand des Membranelements 2 angeordnet sind und der dritte Stützsteg 21 mittig zwischen den beiden am Rand angeordneten Stützstegen 21 angeordnet ist. Durch den Verzicht auf quer zur Rakelbewegungsrichtung RB verlaufenden Stützstegen 21 ist es in vorteilhafter Weise möglich, die Überfahrt in Betrieb des Rakelelements 10 zu vermeiden, wodurch der Verschleiß des Rakelelements 10 signifikant verbessert werden kann. Außerdem gestattet die Ausbildung einer Stützstruktur 20, die ausschließlich aus Stützstegen 21, die sich längs der Rakelbewegungsrichtung RB erstrecken, gebildet ist, ein Aufspannen des Membranelements 2 derart, dass sich die Durchbiegung in einer senkrecht zur Rakelbewegungsrichtung RB verlaufenden Ebene in Richtung der Rakelbewegungsrichtung RB gesehen im Wesentlichen konstant ist bzw. bleibt. In anderen Worten: Die Durchbiegung des Membranelements 2 ändert sich bei der Bewegung des Rakelelements 10 über das Membranelement 2 im Wesentlichen nicht. Entsprechend ist es in vorteilhafter Weise, möglich auf Rakelelemente 10 zu verzichten, die elastisch ausgeformt sind, um sich an einen ändernden Verlauf des durchgebogenen Membranelements 2 anzupassen. Stattdessen kann ein formstabiles Rakelelement 10 derart ausgelegt werden, dass es bei der Bewegung entlang der Rakelbewegungsrichtung RB konstant über die Rakelkante 11 in Kontakt mit der durchgebogenen Membranelement 2 steht. Hierzu weist das Rakelelement 10 insbesondere eine Rakelkante 11 mit einem geschwungenen Rakelkantenverlauf auf, insbesondere an einer der Primärseite 31 des Membranelements 2 zugewandten Seite des Rakelelements 10. D. h. der Rakelkantenverlauf ist an seiner im Betrieb der Primärseite 31 zugewandten Seite mit einem geschwungenen Rakelkantenverlauf versehen. Dabei entspricht der Rakelkantenverlauf demjenigen Verlauf des Membranelements 2, der bei dessen Durchbiegung zu erwarten ist. In dem in Figur 5 dargestellten Ausführungsbeispiel ist der Rakelkantenverlauf derart gebogen bzw. geschwungen, dass er im Betrieb bzw. im Kontakt mit dem Membranelement 2 eine Einbuchtung im Bereich der Stützstege 21 aufweist, die sich längs der Rakelbewegungsrichtung RB erstrecken vorweisen, während Ausbuchtungen bzw. Auswölbung des Rakelkantenverlaufs, insbesondere maximal sind in einem Bereich des Rakelkantenverlaufs der mittig zwischen zwei benachbarten Stützstegen 21 angeordnet ist, wenn das Rakelelement 10 im Betrieb über das Membranelement 2 gezogen wird.

Das Membranelement 2 ist beispielsweise ein im Wesentlichen zweidimensionales Bauteil aus einem flächig hergestellten Filtermedium (z.B. Kunstfasergewebe ('Gaze'), Kunstfaservlies, Lochblech(-folie), z.B. mit Laser perforiertes Blech oder etwas Vergleichbares).

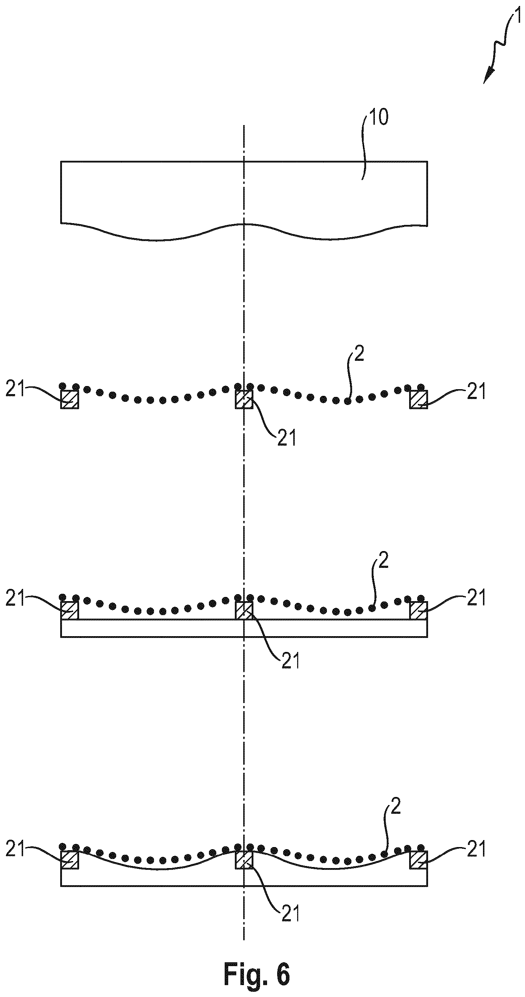

In **Figur 6** ist ein System 1 zum Reinigen eines Membranelements 2 gemäß einer zweiten bevorzugten Ausführungsform der vorliegenden Erfindung dargestellt. Insbesondere handelt es sich um eine beispielhafte Ausführungsform des bereits in Figur 5 dargestellten Systems. Hier wird der geschwungene Rakelkantenverlauf noch einmal dargestellt, insbesondere zusammen mit den Stützstegen 21 und dem Membranelement 2 in einer Schnittansicht, die senkrecht zur Rakelbewegungsrichtung RB verläuft. Insbesondere ist es in dieser Ausführungsform vorgesehen, dass das Membranelement 2 zwischen den Stützstegen 21 und dem Rakelelement 10 angeordnet ist.

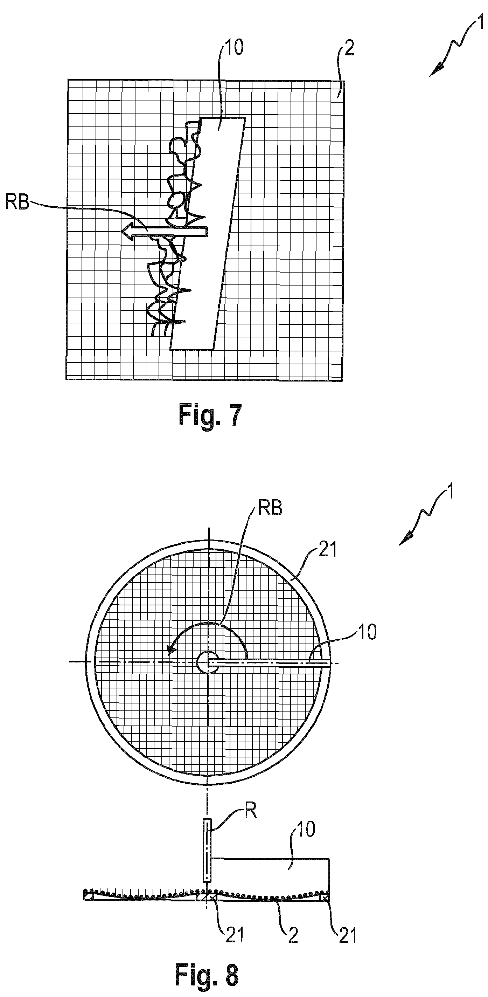

In **Figur 7** ist ein System 1 zum Reinigen eines Membranelements 2 gemäß einer dritten bevorzugten Ausführungsform dargestellt, dabei ist das Rakelelement 10 derart ausgestaltet, dass die Partikel 4 schiebende Rakelkante 11 nicht senkrecht zu der Rakelbewegungsrichtung RB verläuft, insbesondere an einer Seite, die bei der Rakelbewegung der Rakelbewegungsrichtung RB zugewandt ist. Stattdessen ist die Rakelkante 11 gegenüber einer senkrecht zur Rakelbewegungsrichtung RB verlaufenden Ebene geneigt, vorzugsweise zwischen 10° und 45°, weiter bevorzugt zwischen 15° und 35° und besonders bevorzugt zwischen 20° und 25° geneigt. Dadurch ist es in vorteilhafter Weise möglich, die aufgesammelten Partikel 4 beim Reinigen des Membranelements 2 seitlich bzw. lateral bezogen auf die Rakelbewegungsrichtung RB zur Seite zu verdrängen.

In **Figur 8** ist ein System 1 zum Reinigen eines Membranelements 2 gemäß einer vierten bevorzugten Ausführungsform der vorliegenden Erfindung dargestellt. Im Wesentlichen unterscheidet sich die Ausführungsform der Figur 8 von derjenigen aus den Figuren 5 und 6 lediglich dahingehend, dass der Stützsteg 21 ringförmig ausgebildet ist. Entsprechend vollzieht das Rakelelement 10 in diesem Ausführungsbeispiel eine Rotation beim Reinigen bzw. Überfahren des Membranelements 2 zum Reinigen des Membranelements 2. Hierzu ist das Rakelelement 10 an einer Rotationsachse R rotierbar gelagert. Dabei erstreckt sich in dem dargestellten Ausführungsbeispiel, das Rakelelement 10 in radialer Richtung ausschließlich zwischen der Rotationsachse R und dem äußersten bzw. dem außen liegenden Stützsteg 21, der am äußersten Umfang des Membranelements 2 angeordnet ist. Ferner ist ein zentrales Stützelement 21 vorgesehen, insbesondere in Form eines Dorns, auf dem das Rakelelement 10 bzw. die Rotationsachse R im Betrieb aufliegt. Die ringförmige Ausgestaltung des Stützstegs 21 gestattet die endlose Bewegung des Rakelelements 10, das heißt das Rakelelement 10 muss nicht rotierend ausgestaltet werden, sondern kann in einer Bewegung bzw. mit einer Bewegungsrichtung das Rakeln fortsetzen bzw. wiederholen.

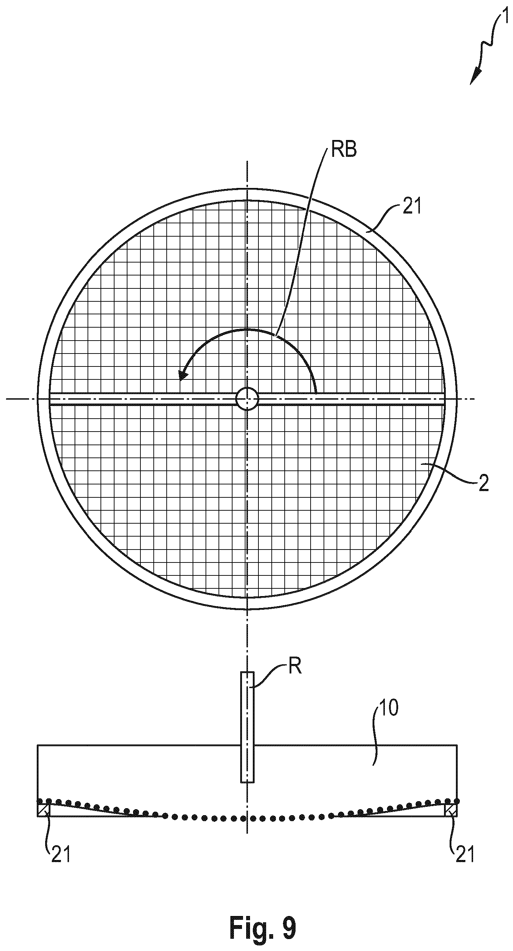

In **Figur 9** ist ein System 1 zum Reinigen eines Membranelements 2 gemäß einer fünften bevorzugten Ausführungsform der vorliegenden Erfindung dargestellt. Dabei unterscheidet sich dieses Ausführungsbeispiel von dem Ausführungsbeispiel aus Figur 8 lediglich dahingehend, dass sich das Rakelelement 10 über einen gesamten Durchmesser des Membranelements 2 erstreckt. Mit anderen Worten, das Rakelelement 2 erstreckt sich von einer Seite des ringförmigen Stützstegs 21 zu einer gegenüberliegenden Stelle des Stützstegs21 und passiert dabei den Mittelpunkt.

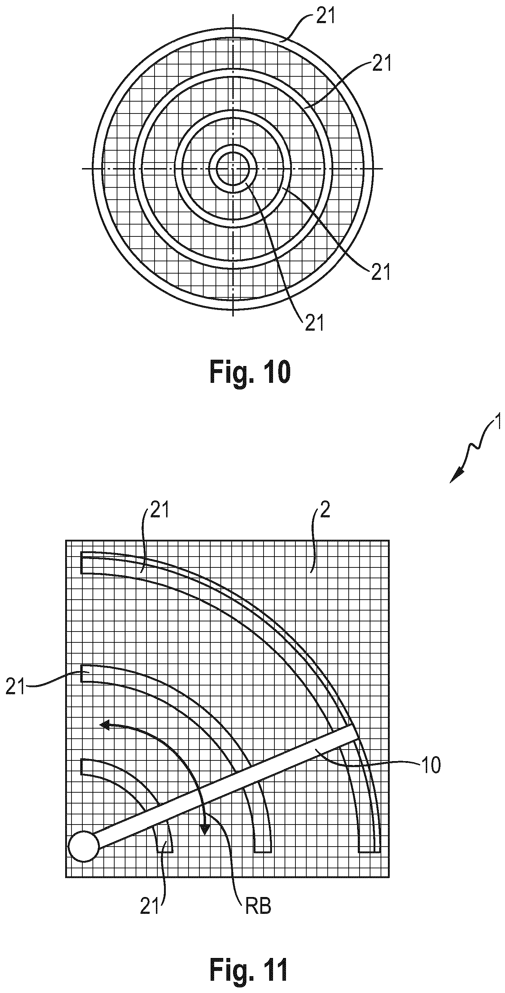

In **Figur 10** ist ein System 1 zum Reinigen eines Membranelements 2 gemäß einer sechsten bevorzugten Ausführungsform der vorliegenden Erfindung dargestellt. Dabei entspricht die Ausführungsform der Figur 10 im Wesentlichen derjenigen aus den Figuren 8 und 9 und unterscheidet sich lediglich dahingehend, dass eine Mehrzahl von Stützstegen, insbesondere ringförmigen Stützstegen 21 vorgesehen ist, die zueinander konzentrisch angeordnet sind. Dadurch wird in vorteilhafter Weise die Durchbiegung zwischen zwei benachbarten Stützstegen 21 reduziert.

In **Figur 11** ist ein System 1 zum Reinigen eines Membranelements 2 gemäß einer siebten bevorzugten Ausführungsform dargestellt. Dabei unterscheidet sich die Ausführung der Figur 11 von derjenigen aus den Figuren 9 und 10 dahingehend, dass statt einer Endlosbewegung eine oszillierende Bewegung des Rakelelements 10 vorgesehen ist. Dabei beschränkt sich insbesondere in dem dargestellten Ausführungsbeispiel die Bewegung des Rakelelements 10 auf eine Bewegung innerhalb eines Kreissegmentes, insbesondere eines Kreissegmentes, das einem Viertel des Gesamtkreises entspricht. Innerhalb dieses zu rakelnden Bereichs überfährt das Rakelelement 10 lediglich Stützstege 21, die sich längs der Rakelbewegungsrichtung RB erstrecken. Dabei erstrecken sich die Stützstege 21 bogenförmig, um der rotierenden Bewegung des Rakelelements 10 Rechnung zu tragen.

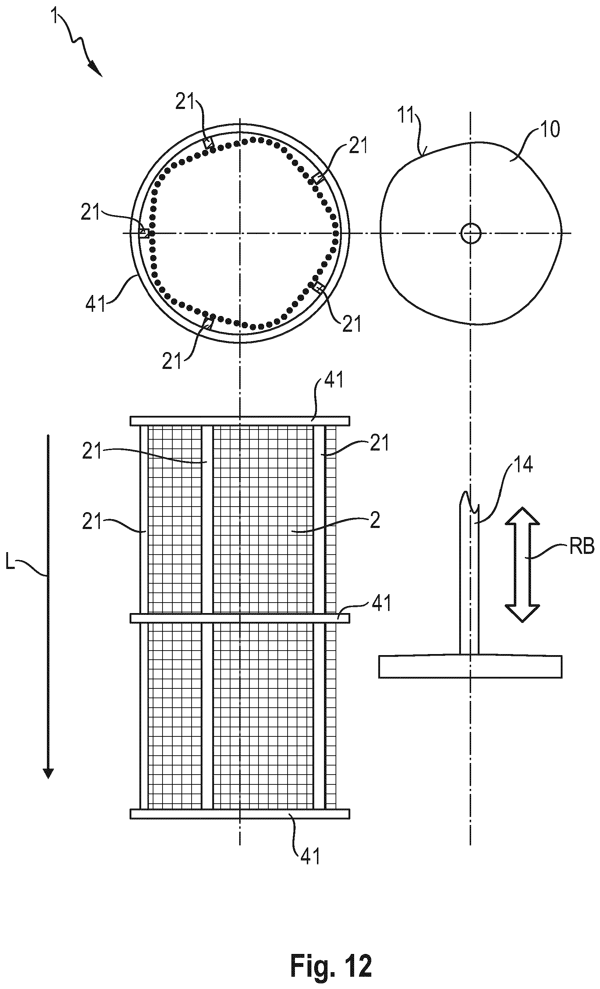

In **Figur 12** ist ein System 1 zum Reinigen eines Membranelements 2 gemäß einer achten bevorzugten Ausführungsform dargestellt. Insbesondere ist es in dieser Ausführungsform vorgesehen, dass das Membranelement 2 zylinderförmig ausgestaltet ist. Das heißt im Gegensatz zu den Ausführungsbeispielen der vorangehenden Figuren ist das Membranelement 2 nicht in einer einzelnen Ebene ausgeformt. Zum Abtragen der Partikel 4 ist dabei ein scheibenförmiges Rakelelement 10 vorgesehen, das mittels eines Schafts 14 entlang der Längsrichtung L des zylinderförmigen Membranelements 2 zur Beseitigung der Partikel 4 an der Primärseite 31 geführt wird. Dabei ist es insbesondere in dem dargestellten Ausführungsbeispiel vorgesehen, dass die Primärseite 31 als die Innenseite des zylinderförmigen Membranelements 2 ausgeformt ist, d. h. das Fluid tritt von Innen kommend radial nach außen durch das Membranelement 2. Entsprechend der Rakelbewegungsrichtung RB ist es hierbei vorgesehen, dass die Stützstege 21 sich parallel zur Rakelbewegungsrichtung RB erstrecken, d. h. insbesondere parallel zur Längsrichtung L des zylinderförmigen Membranelements 2. Außerdem ist es vorgesehen, dass das scheibenförmige Rakelelement 10 einen Umfang in einer senkrecht zur Rakelbewegungsrichtung RB verlaufenden Ebene aufweist, der entsprechend der Lage der einzelnen Stützstege 21 und der zu erwartenden Durchbiegung der Membranelemente 2 bzw. Bereiche der Membranelemente 2 zwischen benachbarten Stützstegen 21 angepasst ist. D. h. der Umfang des Rakelelements 10 ist entsprechend strukturiert bzw. geschwungen bzw. gewölbt ausgeformt. Insbesondere ist es vorgesehen, dass die Stützstege 21 von einer Haltestruktur 41 gehalten werden. In dem dargestellten Ausführungsbeispiel verlaufen die Haltestrukturen 41 quer zur Rakelbewegungsrichtung RB. Hierbei ist zu betonen, dass die Haltestruktur 41 derart ausgelegt ist, dass sie ausreichend beabstandet ist von dem Membranelement 2, sodass sie keinen Einfluss auf die Durchbiegung des Membranelements 2 nimmt. Die Haltestruktur 41 dient lediglich der Fixierung und Positionierung der Stützstege 21.

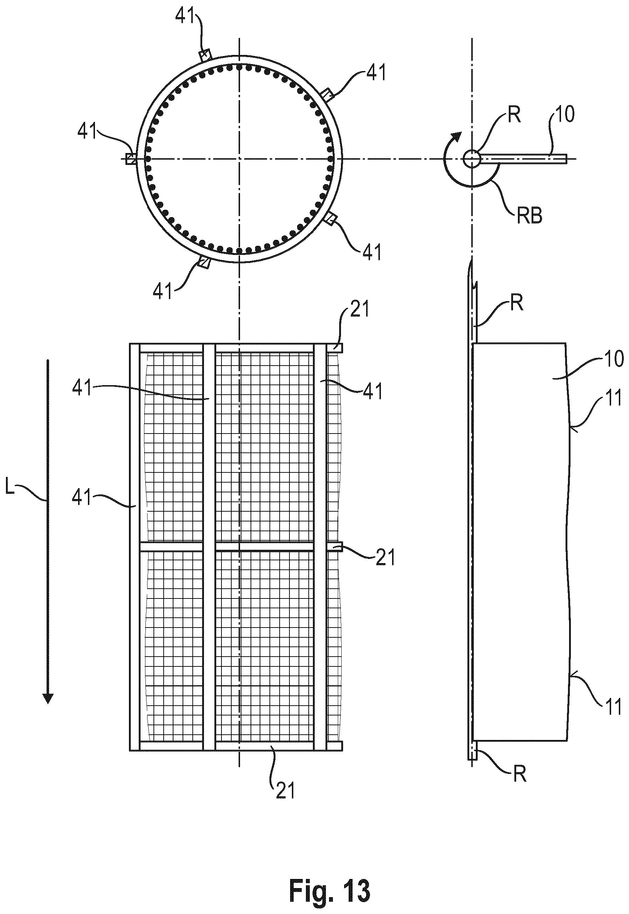

In der **Figur 13** ist ein System 1 zum Reinigen eines Membranelements 2 gemäß einer neunten bevorzugten Ausführungsform dargestellt. Dabei ist es vorgesehen, dass genau, wie in der Figur 12, das Membranelement 2 zylinderförmig ausgestaltet ist. Allerdings ist hier die Bewegung des Rakelelements 10 derart, dass das Rakelelement 10 um die Rotationsachse R rotiert, die parallel zur Längsrichtung L des zylinderförmigen Membranelements 2 verläuft. Entsprechend sind die Stützstege 21, die sich längs der Rakelbewegungsrichtung RB erstrecken in diesem Ausführungsbeispiel quer zur Längsrichtung L des zylinderförmigen Membranelements 2 ausgestaltet. Zudem ist es vorgesehen, dass das sich um die Rotationsachse R rotierende Rakelelement 10 einen entsprechenden Rakelkantenverlauf aufweist, der angepasst ist an die in Längsrichtung L zueinander beabstandeten Stützstegen 21. Weiterhin ist es vorgesehen, dass in dem hier dargestellten Ausführungsbeispiel die Haltestruktur 41 durch sich entlang der Längsrichtung L erstreckende Stützstege 21 ausgebildet ist, die an der Außenseite der ringförmig ausgebildeten Stützstege 21 angebunden sind. Ferner ist es vorgesehen, dass - wie in dem Ausführungsbeispiel der Figur 12 - während des Betriebs das Fluid vom Inneren des zylinderförmigen Mantelelements 2 kommend radial nach außen geführt wird. Entsprechend bildet die Innenseite des zylinderförmigen bzw. rohrförmigen Mantelelements 2 die Primärseite 31 des hier dargestellten Membranelements 2.

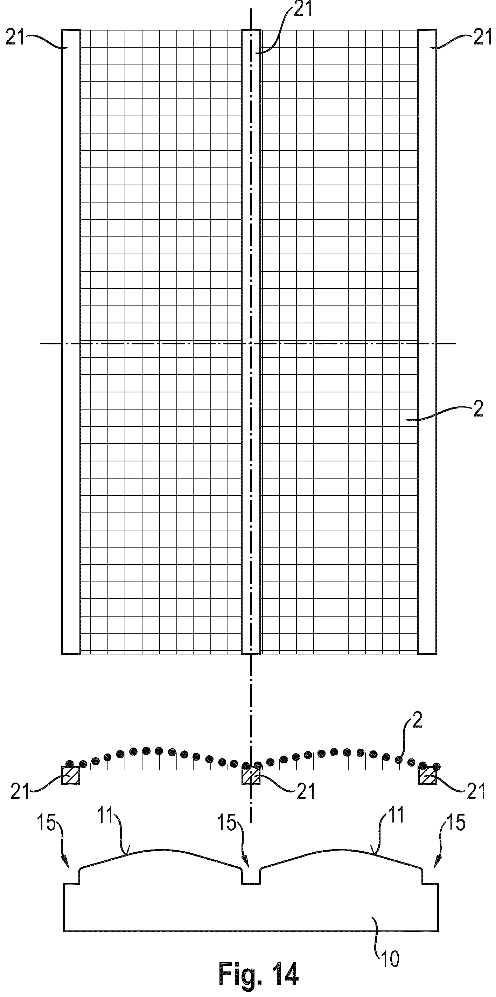

In **Figur 14** ist ein System 1 zum Reinigen eines Membranelements 2 gemäß einer zehnten bevorzugten Ausführungsform dargestellt. Die hier dargestellte Ausführungsform zeichnet sich insbesondere dadurch aus, dass die Stützstege 21 zwischen dem Membranelement 2 und dem Rakelelement 10 angeordnet sind, insbesondere in einer senkrecht zur Primärseite 31 bzw. Sekundärseite verlaufenden Richtung. Das heißt, die Stützstege 21 sind auf der Primärseite 31 des Membranelements 2 angeordnet bzw. angebunden. Dadurch ist es in vorteilhafter Weise möglich, durch entsprechende Ausnehmungen bzw. Einbuchtungen 15 im Rakelelement 10, insbesondere an der Seite, die den Rakelkantenverlauf definiert, eine Möglichkeit zur Führung des Rakelelements 10 bereitzustellen. Dabei greifen die Stützstege 21 im Betrieb in die entsprechenden Einbuchtungen 15 ein und wechselwirken mit diesen beispielsweise in einer senkrecht zur Rakelbewegungsrichtung RB verlaufenden Richtung formschlüssig zusammen, sodass das Rakelelement 10 von den Stützstegen 21 während des Rakelns geführt werden kann.

### Bezugszeichenliste:

- 1: System
- 2: Membranelement
- 4: Partikel
- 10: Rakelelement
- 11: Rakelkante
- 12: Rakellippe
- 14: Schaft
- 15: Einbuchtung
- 20: Stützstruktur
- 21: Stützsteg
- 24: Segment
- 31: Primärseite
- 32: Sekundärseite
- 41: Haltestruktur
- R: Rotationsachse
- F: Kraft
- FR: Flussrichtung
- RB: Rakelbewegungsrichtung

## Patentansprüche

1. System (1) zum Reinigen eines Membranelements (2), insbesondere eines Membranelements (2) eines wasserführenden Haushaltsgeräts, umfassend:
- das Membranelement (2),
- eine Stützstruktur (20), an die das Membranelement (2) angebunden ist und/oder auf der das Membranelement (2) aufliegt,
- und ein Rakelelement (10), das im Betrieb zum Reinigen des Membranelements (2) entlang einer Rakelbewegungsrichtung (RB) über das Membranelement (2) bewegbar ist,
wobei die Stützstruktur (20) im vom Rakelelement bearbeiteten Bereich des Membranelements (2) ausschließlich Stützstege (21) aufweist, die sich längs der Rakelbewegungsrichtung (RB) erstrecken,
**dadurch gekennzeichnet, dass** das Rakelelement (10) eine Rakelkante (11) mit einem geschwungenen Rakelkantenverlauf, vorzugsweise einem parabelförmigen, kreisbogenförmigen und/oder einem einer Kettenlinie folgenden Rakelkantenverlauf, aufweist, sodass der Rakelkantenverlauf an den Verlauf des sich zwischen zwei benachbarten Stegelementen der Stützstege (21) durchbiegenden Membranelements (2) angepasst ist.

2. System (1) gemäß Anspruch 1, wobei das Rakelelement (10) starr ausgebildet ist

3. System (1) gemäß einem der vorhergehenden Ansprüche, wobei einer oder mehrere Stützstege (21), ringförmig, insbesondere konzentrisch zueinander angeordnet, sind.

4. System (1) gemäß einem der vorhergehenden Ansprüche, wobei das Membranelement (2) zylinderförmig, quaderförmig und/oder kegelförmig ausgebildet ist und wobei das Rakelelement (10) innerhalb oder außerhalb des Membranelements (2) angeordnet ist.

5. System (1) gemäß einem der vorhergehenden Ansprüche, wobei mindestens ein Stützsteg (21), der sich längs der Rakelbewegungsrichtung (RB) erstreckt, zwischen dem Rakelelement (10) und dem Membranelement (2) angeordnet ist und/oder der mindestens eine Stützsteg (21), der sich längs der Rakelbewegungsrichtung (RB) erstreckt, zur Führung des Rakelelements (10) konfiguriert ist.

6. Verfahren zum Reinigen eines Membranelements (2) mit einem System (1) gemäß einem der vorhergehenden Ansprüche, wobei die Rakelbewegung eine oszillierende Bewegung oder eine endlose Bewegung ist.

## Claims

1. System (1) for cleaning a membrane element (2), in particular a membrane element (2) of a water-conducting household appliance, comprising:
- the membrane element (2),
- a supporting structure (20), to which the membrane element (2) is tied and/or on which the membrane element (2) rests,
- and a scraping element (10), which, during operation, can be moved along a scraping movement direction (RB) over the membrane element (2) for the purpose of cleaning the membrane element (2),
wherein the supporting structure (20) exclusively has supporting bars (21) in the region of the membrane element (2) processed by the scraping element, which extend along the scraping movement direction (RB),
**characterised in that** the scraping element (10) has a scraping edge (11) with a curved scraping edge profile, preferably a scraping edge profile which has the shape of a parabola or arc and/or follows a catenary curve so that the scraping edge profile is adjusted to the profile of the membrane element (2) which deflects between two adjacent bar elements of the supporting bars (21).

2. System (1) according to claim 1, wherein the scraping element (10) is embodied to be rigid.

3. System (1) according to one of the preceding claims, wherein one or more supporting bars (21) are arranged in an annular, in particular concentric manner with respect to one another.

4. System (1) according to one of the preceding claims, wherein the membrane element (2) is embodied to be cylindrical, cuboid and/or conical and wherein the scraping element (10) is arranged inside or outside of the membrane element (2).

5. System (1) according to one of the preceding claims, wherein at least one supporting bar (21), which extends along the scraping movement direction (RB), is arranged between the scraping element (10) and the membrane element (2), and/or the at least one supporting bar (21), which extends along the scraping movement direction (RB), is configured to guide the scraping element (10).

6. Method for cleaning a membrane element (2) with a system (1) according to one of the preceding claims, wherein the scraping movement is an oscillating movement or an interminable movement.

## Revendications

1. Système (1) de nettoyage d'un élément membrane (2), en particulier d'un élément membrane (2) d'un appareil électroménager à circulation d'eau, comprenant:
- l'élément membrane (2),
- une structure d'appui (20) à laquelle l'élément membrane (2) est lié et/ou sur laquelle repose l'élément membrane (2),
- et un élément formant râcle (10), lequel est mobile lors d'un nettoyage en marche de l'élément membrane (2) dans le sens du mouvement de la râcle (RB) au-dessus de l'élément membrane (2),
dans lequel la structure d'appui (20) comprend dans la zone de l'élément membrane (2) traitée par l'élément formant râcle, exclusivement des traverses d'appui (21), lesquelles s'étendent suivant le sens de mouvement de la râcle (RB),
**caractérisé en ce que** l'élément formant râcle (10) comprend une arête de raclage (11) présentant un tracé d'arête de raclage bombé, de préférence un tracé d'arête de raclage parabolique, en arc de cercle et/ou suivant une ligne de chaînette, de sorte que le tracé d'arête de raclage s'adapte au tracé de l'élément de membrane (2) fléchissant entre deux éléments de traverses voisins des traverses d'appui (21).

2. Système (1) selon la revendication 1, dans lequel l'élément de râclage (10) est réalisé rigide.

3. Système (1) selon l'une des revendications précédentes, dans lequel une ou plusieurs traverses d'appui (21) sont annulaires, en particulier agencées l'une par rapport à l'autre de manière concentrique.

4. Système (1) selon l'une des revendications précédentes, dans lequel l'élément membrane (2) est réalisé cylindrique, cubique et/ou conique et dans lequel l'élément formant râcle (10) est agencé à l'intérieur ou à l'extérieur de l'élément membrane (2).

5. Système (1) selon l'une des revendications précédentes, dans lequel au moins une traverse d'appui (21), qui s'étend dans le sens de mouvement de râcle (RB), est agencée entre l'élément formant râcle (10) et l'élément membrane (2) et/ou la au moins une traverse d'appui (21), laquelle s'étend dans le sens de mouvement de râcle (RB), est configurée pour guider l'élément formant râcle (10).

6. Procédé de nettoyage d'un élément membrane (2) comprenant un système (1) selon l'une des revendications précédentes, dans lequel le mouvement de râcle est un mouvement oscillant ou un mouvement sans fin.
